# EUROPÄISCHE PATENTSCHRIFT

(11) **EP 3 122 976 B1**
(45) Veröffentlichungstag und Bekanntmachung des Hinweises auf die Patenterteilung: **18.07.2018**
(21) Anmeldenummer: 15710777.2
(22) Anmeldetag: 18.03.2015
(51) Int. Cl.: E05F 11/38

(54) **MITNEHMER FÜR EINE VERSCHIEBBARE FENSTERSCHEIBE, FENSTERSCHEIBENANORDNUNG**
DRIVER FOR A MOVABLE WINDOW PANE, WINDOW PANE ARRANGEMENT
ÉLÉMENT D'ENTRAÎNEMENT DESTINÉ À UNE VITRE COULISSANTE, AGENCEMENT DE VITRE

(30) Priorität: 25.03.2014 DE 102014205548
(43) Veröffentlichungstag der Anmeldung: 01.02.2017
(73) Patentinhaber: Volkswagen Aktiengesellschaft, 38440 Wolfsburg (DE)
(72) Erfinder: LANGENSTRÖER, Kai, 38518 Gifhorn (DE); ALMEIDA, Pedro, 38479 Tappenbeck (DE); HAVEMANN, Jörg, 29389 Bad Bodenteich (DE)
(86) Internationale Anmeldenummer: PCT/EP2015/055663
(87) Internationale Veröffentlichungsnummer: WO 2015/144519

(56) Entgegenhaltungen:
- DE-A1- 10 039 688
- US-A1- 2009 090 064
- US-A1- 2010 313 481

## Beschreibung

Die Erfindung betrifft einen Mitnehmer für eine verschiebbare Fensterscheibe, insbesondere eines Kraftfahrzeugs, mit einer Aufnahmevertiefung zur Aufnahme eines Randabschnitts der Fensterscheibe, und mit einer elastisch verlagerbaren Rastnase, die zum Eingriff in eine Rastaussparung der Fensterscheibe ausgebildet ist, um die Fensterscheibe an dem Mitnehmer zu arretieren, wobei die Rastnase in ihrer Ausgangsstellung die Aufnahmevertiefung versperrt und eine der Aufnahmevertiefung zugeordnete Einführschräge aufweist, so dass die Rastnase durch das Einführen der Fensterscheibe in die Aufnahmevertiefung in eine die Aufnahmevertiefung freigebende Stellung verlagert wird.

Ferner betrifft die Erfindung eine Fensterscheibenanordnung, insbesondere für ein Kraftfahrzeug, mit einer verschiebbaren Fensterscheibe und mit einem mit der Fensterscheibe verbindbaren/verbundenen Mitnehmer.

Mitnehmer und Fensterscheibenanordnungen der Eingangs genannten Art sind aus dem Stand der Technik bekannt. Verstellbare oder verschiebbare Fensterscheiben in Kraftfahrzeugen sind in der Regel in einem Rahmen geführt und werden durch einen Mitnehmer verstellt, der über eine Antriebseinrichtung entlang einer Führungsbahn angetrieben wird, wodurch die mit dem Mitnehmer verbundene Fensterscheibe angehoben oder abgesenkt werden kann.

Um das Fenster beispielsweise nach oben zu schieben, reicht es aus, dass der Mitnehmer gegen eine Seite der Fensterscheibe gedrückt wird. Um die Fensterscheibe durch den Mitnehmer auch in die entgegengesetzte Richtung verfahren zu können, muss der Mitnehmer mit der Fensterscheibe fest verbunden sein. Dabei ist es bekannt, den Mitnehmer mit einer Rastnase zu versehen, die eine einfache und insbesondere werkzeuglose Montage des Mitnehmers an der Fensterscheibe erlaubt. Ein entsprechender Mitnehmer ist beispielsweise in der DE 10 2012 223 825 A1 beschrieben. Der Mitnehmer weist eine Aufnahmevertiefung auf, in welche die Fensterscheibe mit einem Randabschnitt einschiebbar ist. Der Aufnahmevertiefung ist die Rastnase zugeordnet, die die Aufnahmevertiefung in ihrem entspannten Zustand beziehungsweise in ihrer Ausgangsstellung versperrt. Wird die Fensterscheibe in die Aufnahmevertiefung eingeführt, trifft sie auf die Rastnase, welche mit einer Einführschräge versehen ist. Die Einführschräge ist dabei der Aufnahmevertiefung derart zugeordnet, dass sich durch Einführen der Fensterscheibe in die Aufnahmevertiefung die Rastnase aus der Ausgangsstellung in eine die Aufnahmevertiefung freigebende Stellung verlagert beziehungsweise zurückgedrängt wird. Die Fensterscheibe weist eine Rastaufnahme in dem Randabschnitt auf, in welche die Rastnase aufgrund ihrer elastischen Anbindung an den Mitnehmer automatisch einrastet und dadurch formschlüssig die Fensterscheibe an dem Mitnehmer arretiert, wenn die Fensterscheibe entsprechend weit in die Aufnahmevertiefung eingeschoben wurde.

Aus der Offenlegungsschrift US 2010/313481 ist ebenfalls bereits ein Mitnehmer der eingangs genannten Art bekannt. Auch aus den Offenlegungsschriften DE 100 39 688 A1 und US 2009/090064 A1 sind bereits Mitnehmer für Fensterscheiben bekannt, die verlagerbare Rastnasen zum Arretieren der Fensterscheibe an dem Mitnehmer aufweisen.

Es hat sich jedoch herausgestellt, dass diese einfache Art der Montage einen besonderen Nachteil mit sich führt. Unter Zuhilfenahme eines Hilfswerkzeugs lässt sich der Mitnehmer nämlich leicht von der Fensterscheibe lösen, wenn beispielsweise ein schmales Blech durch einen Öffnungsspalt zwischen einem die Fensterscheibe führenden Rahmen, beziehungsweise Türrahmen, und der Fensterscheibe in einen Innenraum, beispielsweise der die Fensterscheibenanordnung aufweisenden Kraftfahrzeugtür, eingeführt und zwischen die Rastnase und die Fensterscheibe geschoben wird, so dass die Rastnase dadurch aus der Rastaussparung der Fensterscheibe herausverlagert wird. In der zuvor genannten Offenlegungsschrift wird versucht, dies durch das Vorsehen einer zusätzlichen Sicherung oder eines zusätzlichen Sicherungselementes zu vermeiden. Die offenbarten Lösungen sind jedoch konstruktiv aufwändig und führen damit auch zu einem entsprechend finanziellen Aufwand bei der Herstellung.

Der Erfindung liegt die Aufgabe zugrunde, einen Mitnehmer sowie eine Fensterscheibenanordnung mit einem entsprechenden Mitnehmer zu schaffen, die auf einfache und kostengünstige Art und Weise eine missbräuchliche Manipulation der Verbindung zwischen Mitnehmer und Fensterscheibe sicher verhindert.

Die der Erfindung zugrundeliegende Aufgabe wird durch einen Mitnehmer mit den Merkmalen des Anspruchs 1 gelöst. Dieser hat den Vorteil, dass durch eine sehr einfache konstruktive Maßnahme an der Rastnase die Sicherheit gegen ein unerwünschtes Lösen der Arretierung erhöht wird. Insbesondere verhindert es der erfindungsgemäße Mitnehmer, dass ein Manipulationswerkzeug, das zwischen Rastnase und Fensterscheibe geschoben wird, die Rastnase vollständig aus der Rastaussparung der Fensterscheibe herausverlagern kann. Die Erfindung sieht hierzu vor, dass die Rastnase des Mitnehmers an der Einführschräge eine Fangnut aufweist, die sich parallel zur Aufnahmevertiefung über die gesamte Breite der Rastnase erstreckt.

Erfindungsgemäß ist also eine Fangnut vorgesehen, die sich über die Einführschräge erstreckt. Dabei erstreckt sich die Fangnut parallel zur Aufnahmevertiefung und damit senkrecht zur üblichen Verlagerungsrichtung der Rastnase, die in der Regel senkrecht zur Ebene der Fensterscheibe liegt. Wird nunmehr ein Manipulationswerkzeug zwischen die Fensterscheibe und die Rastnase eingeführt, so wird die Rastnase maximal so weit aus der Rastaussparung herausverlagert, bis das Manipulationswerkzeug entlang der Einführschräge in die Fangnut rutscht. Dort wird zumindest die Spitze des Manipulationswerkzeugs gefangen. Ein weiteres Einschieben des Manipulationswerkzeugs ist dann nicht mehr möglich. Entsprechend kann die Rastnase nicht weiter aus der Rastaussparung herausverlagert werden, wodurch die Arretierung der Fensterscheibe bestehen beziehungsweise gesichert bleibt.

Gemäß einer vorteilhaften Weiterbildung der Erfindung ist vorgesehen, dass die Fangnut bei in die Aufnahmevertiefung eingesteckter Fensterscheibe in der Rastaussparung der Fensterscheibe liegt. Dadurch wird gewährleistet, dass, wenn ein Manipulationswerkzeug zwischen Rastnase und Fensterscheibe eingeschoben wird, die Spitze des Manipulationswerkzeugs durch die Einführschräge auf die Fangnut zugeleitet beziehungsweise geschoben wird, die sich aus der Rastöffnung der Fensterscheibe heraus bewegt. Damit wird verhindert, dass das Manipulationswerkzeug auf den zwischen der Fangnut und der der Fensterscheibe zugewandten Spitze der Rastnase liegenden Abschnitt der Einführschräge trifft und die Fangnut dadurch übergeht.

Weiterhin ist bevorzugt vorgesehen, dass die Fangnut schmaler ausgebildet ist als die Aufnahmevertiefung, insbesondere schmaler als die Fensterscheibe. Durch die schmale Ausbildung der Fangnut wird erreicht, dass die breitere Fensterscheibe beim Einschieben in die Aufnahmevertiefung die Fangnut überbrücken und dadurch die Rastnase vollständig in die die Aufnahmevertiefung freigebende Stellung zurückdrängen kann. Damit wird trotz Vorsehen der Fangnut die einfache Montage der Fensterscheibe an dem Mitnehmer auch weiterhin gewährleistet.

Es ist ferner bevorzugt vorgesehen, dass die Fangnut mindestens so breit ist, wie die breiteste von dem Manipulationswerkzeug durchgreifbare Öffnung oder Spaltöffnung zwischen Fensterscheibe und beispielsweise Fensterscheibendichtung oder -Rahmen. Dadurch wird gewährleistet, dass jedes durch die entsprechende Öffnung hindurchschiebbares Manipulationswerkzeug oder Hilfswerkzeug sicher in der Fangnut auffangbar ist.

Auch ist bevorzugt vorgesehen, dass die Einführschräge einen ersten Führungsabschnitt und einen zweiten Führungsabschnitt aufweist, die zueinander geneigt ausgerichtet sind. Die Einführschräge weist somit mindestens zwei unterschiedliche Steigungen beziehungsweise Steigungswinkel auf. Dadurch wird beispielsweise das Einführen der Fensterscheibe in die Aufnahmevertiefung und das Zurückdrängen der Rastnase vereinfacht.

Vorzugsweise liegt die Fangnut zwischen dem ersten Führungsabschnitt und dem zweiten Führungsabschnitt. Dies hat den Vorteil, dass die Fangnut in einem Knick der Einführschräge vorgesehen ist, wodurch die Fangwirkung der Fangnut erhöht wird. Insbesondere ist vorgesehen, dass der Abschnitt der Einführschräge zwischen der Fangnut und der Spitze der Rastnase in einem größeren Winkel zur Einschieberichtung der Fensterscheibe steht als der erste Führungsabschnitt. Dadurch wird ein Hilfswerkezeug steil in die Fangnut geleitet, wodurch die Sicherheit vor einem Überbrücken der Fangnut durch das Hilfswerkzeug weiter erhöht wird.

Gemäß einer vorteilhaften Weiterbildung der Erfindung ist außerdem vorgesehen, dass mindestens eine Seitenwand der Fangnut zumindest im Wesentlichen senkrecht zu einem Boden der Fangnut ausgerichtet ist. Dadurch wird ein rechter Winkel zwischen der Seitenwand und dem Boden der Fangnut gebildet, in welchem das Manipulationswerkezug besonders sicher einfangbar ist. Insbesondere ist vorgesehen, dass es sich bei der genannten Seitenwand um die der Fensterscheibe zugewandten Seitenwand der Fangnut handelt. Besonders bevorzugt ist vorgesehen, dass sich diese Seitenwand parallel zur Fensterscheibe erstreckt, wenn die Rastnase durch das Manipulationswerkzeug entsprechend weit aus der Rastaussparung der Fensterscheibe aus verlagert wurde, um eine sichere Arretierung des Hilfswerkzeugs in der Fangnut zu gewährleisten.

Die erfindungsgemäße Fensterscheibenanordnung mit den Merkmalen des Anspruchs 7 zeichnet sich durch den erfindungsgemäßen Mitnehmer aus. Es ergeben sich für die Fensterscheibenanordnung die bereits genannten Vorteile. Insbesondere verhindert die erfindungsgemäße Fensterscheibenanordnung, dass durch das Einschieben eines einfachen Manipulationswerkzeugs die Rastnase aus der Rastaussparung der Fensterscheibe herausverlagert werden kann.

Besonders bevorzugt ist vorgesehen, dass die Fensterscheibe an ihrem dem Mitnehmer zugewandten Rand wenigstens eine Einführfase aufweist. Diese Einführfase kann beispielsweise durch einen Scheibenschliff oder Dergleichen gebildet sein. Die Einführfase erleichtert das Einschieben der Fensterscheibe in die Aufnahmevertiefung und insbesondere das Verlagern der Rastnase in die die Aufnahmevertiefung freigebenden Stellung.

Weiterhin ist bevorzugt vorgesehen, dass die Einführfase derart ausgebildet ist, dass sie beim Einschieben der Fensterscheibe in die Aufnahmevertiefung die Fangnut der Rastnase überbrückt. Die Einführfase ist also derart groß ausgebildet, dass die Fensterscheibe beim Einschieben in die Aufnahmevertiefung selbst nicht mit der Fangnut zusammenwirkt. Durch eine entsprechend große Einführfase trifft die Fensterscheibe stattdessen direkt auf den zweiten Führungsabschnitt der Einführschräge der Rastnase. Somit wird einerseits die Sicherheit gegen unbefugtes Lösen der Verbindung zwischen Mitnehmer und Fensterscheibe gewährleistet, und gleichzeitig die einfache Montierbarkeit der Fensterscheibe an dem Mitnehmer beibehalten.

Im Folgenden soll die Erfindung anhand eines Ausführungsbeispiels näher erläutert werden. Dazu zeigen:
- Figur 1: einen Mitnehmer einer Fensterscheibenanordnung in einer Draufsicht,
- Figuren 2A und B: den Mitnehmer in einer Seitenansicht in unterschiedlichen Situationen,
- Figur 3: eine Detailansicht des Mitnehmers und
- Figur 4: die Detailansicht in einer Gebrauchsstellung.

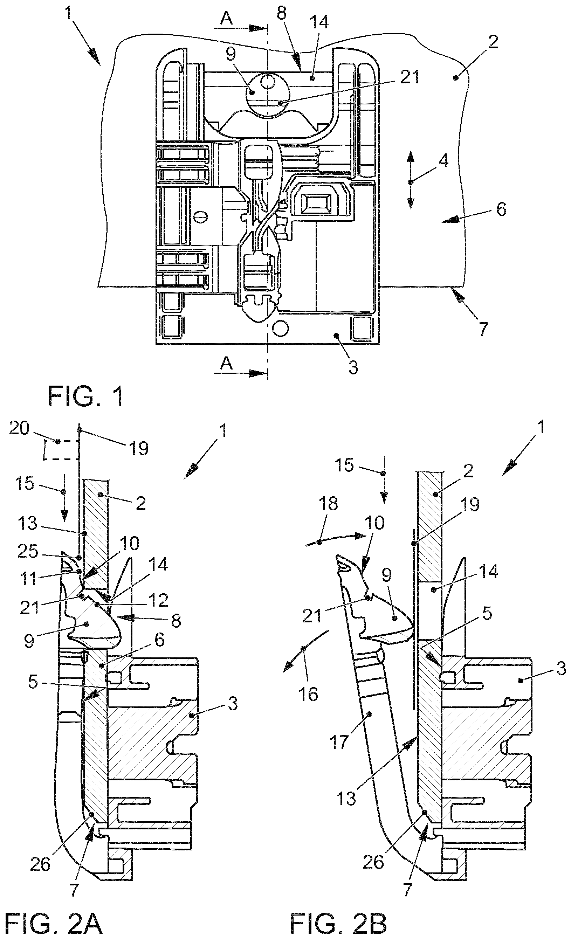

Figur 1 zeigt in einer vereinfachten Draufsicht eine Fensterscheibenanordnung 1, die eine Fensterscheibe 2 und einen Mitnehmer 3 umfasst. Der Mitnehmer 3 dient dazu, die Fensterscheibe 2 in einem hier nicht dargestellten Rahmen nach oben und nach unten zu verschieben, wie durch einen Doppelpfeil 4 angedeutet. Der Mitnehmer 2 wird dazu beispielsweise von einer elektrischen Aktoreinrichtung angetrieben. Um die Fensterscheibe in beide gewünschten Richtungen durch den Mitnehmer 3 zu transportieren, ist dieser mit der Fensterscheibe 2 formschlüssig verbunden.

Figuren 2A und 2B zeigen dazu die Fensterscheibenanordnung 1 jeweils in einer Schnittdarstellung entlang der Linie A-A aus Figur 1.

Der Mitnehmer 3 weist eine Aufnahmevertiefung 5 auf, in welcher ein Randabschnitt 6 der Fensterscheibe 2 aufgenommen ist. Die Aufnahmevertiefung 5 ist dabei derart ausgebildet, dass die Fensterscheibe 2 in der die Aufnahmevertiefung 5 im Wesentlichen formschlüssig und vorzugsweise im Wesentlichen spielfrei gehalten ist. Insbesondere entspricht dabei die in der Seitenansicht dargestellte Breite der Aufnahmevertiefung 5 der Breite der Fensterscheibe 2 an ihrem Randbereich 6. An ihrem Außenrand 7 stößt die Fensterscheibe 2 gegen den Mitnehmer 3, so dass der Mitnehmer 3 durch eine Aufwärtsbewegung die Fensterscheibe 2 nach oben verfahren kann. Um die Fensterscheibe 2 auch in die entgegengesetzte Richtung bewegen zu können, ist eine Rastvorrichtung 8 vorgesehen.

Die Rastvorrichtung 8 weist eine elastisch verlagerbare Rastnase 9 auf. Die Rastnase erstreckt sich in dem in Figur 2A dargestellten Ausgangszustand durch die Aufnahmevertiefung 5 hindurch und versperrt sie dadurch. Die Rastnase 9 weist an ihrer Oberseite eine Einführschräge 10 auf, die der Aufnahmevertiefung 5 beziehungsweise der Fensterscheibe 2 zugewandt ist. Die Einführschräge 10 weist einen ersten Führungsabschnitt 11 sowie einen zweiten Führungsabschnitt 12 auf, die zueinander geneigt ausgerichtet sind, so dass der erste Führungsabschnitt 10 einen kleineren Winkel mit der Fensterscheibe 2 einschließt als der zweite Führungsabschnitt 12, der sich im Wesentlichen im Bereich der Aufnahmevertiefung 5 beziehungsweise durch diese hindurch erstreckt. Der erste Führungsabschnitt 11 ist im Wesentlichen der Außenseite 13 der Fensterscheibe 2 zugeordnet. Die Fensterscheibe 2 weist weiterhin eine Rastaussparung 14 auf, durch welche sich die Rastnase 9 bereichsweise hindurch erstreckt. Die Unterseite der Rastnase 9 ist eben ausgebildet, so dass sie sich im Wesentlichen horizontal durch die Aufnahmevertiefung 5 erstreckt. Dabei ist die Unterseite der Rastnase 9 dem unteren Rand der Rastaussparung 14 zugeordnet, so dass die Rastnase 9 auf dem unteren Rand der Rastaussparung 14 aufliegt. Wird nun der Mitnehmer 3 nach unten gezogen, so wird die Zugkraft durch die Rastnase 9 auf die Fensterscheibe 2 übertragen.

Wie in Figur 2B gezeigt, gestaltet sich die Montage der Fensterscheibenanordnung 1 sehr einfach. Zur Montage wird einfach die Fensterscheibe 2 von oben in die Aufnahmeaussparung 5, wie durch einen Pfeil 15 angedeutet, mit ihrem Rand 7 zuerst eingeschoben. Dabei trifft der Rand 7 auf die Einführschräge 10 der Rastnase 9. Die Einführschräge 10 bewirkt dann, dass die Rastnase 9 aus dem Bereich der Aufnahmevertiefung 5 heraus nach außen verlagert wird, wie durch einen Pfeil 16 angedeutet. Vorliegend ist die Rastnase 9 fest mit einer die Aufnahmevertiefung 5 nach vorne begrenzenden Seitenwand 17 des Mitnehmers 3 ausgebildet. Die Seitenwand 17 ist dabei entweder selbst elastisch ausgebildet oder elastisch an dem Mitnehmer 3 gehalten, so dass sie gemäß Pfeil 16 elastisch verlagerbar ist, um die Rastnase 9 aus dem Bereich der Aufnahmevertiefung 5 durch das Einschieben der Fensterscheibe 2 zu gewährleisten. Sobald die Rastnase 9 aus ihrer Ausgangsstellung in die die Aufnahmevertiefung 5 freigebende Stellung, wie sie in Figur 2B gezeigt ist, verlagert wurde, kann die Fensterscheibe 2 vollständig in die Aufnahmevertiefung 5 bis zum Anschlag eingeschoben werden, so dass die Rastaussparung 14 dann im Bereich der Rastnase 9 liegt. Durch die Eigenelastizität der Lagerung der Rastnase 9, federt diese wieder selbsttätig zurück in ihre Ausgangsstellung gemäß Pfeil 18, in welcher sie, wie in Figur 2A gezeigt, in der Rastaussparung 14 einliegt, um den Mitnehmer 3 an der Fensterscheibe 2 zu arretieren.

Diese sehr einfache Montagemöglichkeit hat den Nachteil, dass ohne weitere Vorkehrungen durch Einschieben eines Manipulationswerkzeuges 19, das beispielsweise als dünnes Blechelement ausgebildet ist, durch einen Öffnungsspalt zwischen einem hier nur angedeuteten Türrahmen 20 und der Fensterscheibe 2 bis zur Rastnase 9 die Rastnase 9 gemäß Pfeil 16 in Figur 2B nach außen verlagert und dadurch der Mitnehmer 3 von der Fensterscheibe 2 gelöst werden kann.

Um dies zu vermeiden ist vorliegend vorgesehen, dass die Rastnase 9 mit einer Fangnut 21 versehen ist.

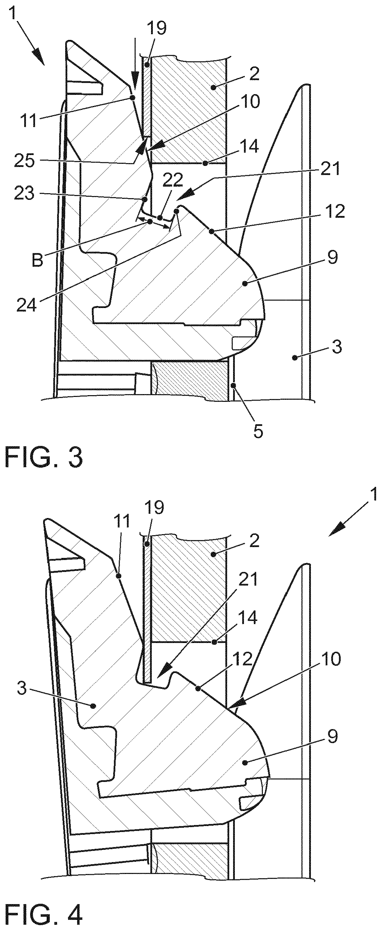

Figur 3 zeigt hierzu eine vergrößerte Detailansicht der Rastnase 9 mit der Fangnut 21. Die Fangnut 21 liegt zwischen dem ersten Führungsabschnitt 11 und dem zweiten Führungsabschnitt 12 der Einführschräge 10. Die Fangnut 21 erstreckt sich parallel zu der Aufnahmevertiefung 5 über die gesamte Breite der Rastnase 9, wie insbesondere in Figur 1 gezeigt. Die Fangnut 21 weist einen Boden 22 sowie zwei gegenüberliegende Seitenwände 23 und 24 auf, die senkrecht zu dem Boden 22 ausgerichtet sind. Die Fangnut 21 ist derart in der Rastnase 9 ausgebildet, dass sie in der Ausgangsstellung der Rastnase 9, innerhalb der Rastaussparung 14 der Fensterscheibe 2 liegt. Die Breite B der Fangnut 21 ist dabei mindestens so breit gewählt, wie die maximale Spaltöffnung zwischen dem Fenster 2 und dem Fensterrahmen 20, jedoch schmaler als die Breite der Fensterscheibe 2.

Die Fangnut 21 verhindert auf einfache Art und Weise, dass der Mitnehmer 3 von der Fensterscheibe 2, wie zuvor beschrieben, gelöst werden kann. Ein Manipulationswerkzeug 19, das durch den Öffnungsspalt zwischen Türrahmen 20 und Fenster 2 passt, und entlang der Fensterscheibe 2, wie zuvor beschrieben, bis auf die Rastnase 9 geschoben wird, dringt diese zunächst ein Stück weit aus der Rastaussparung 14 heraus, bis die Spitze 25 des Manipulationswerkzeugs in die Fangnut 21 gerät, die aus der Rastaussparung 14 herausbewegt wurde. Sobald das Manipulationswerkzeug 19 dadurch in der Fangnut 21 gefangen wurde, kann es nicht mehr weiter nach unten verschoben oder die Rastnase durch das Manipulationswerkzeug weiter aus der Rastaussparung 14 herausbewegt werden. Hierdurch wird auf besonders einfache Art und Weise die Sicherheit der Fensterscheibenanordnung 1 vor einem Manipulationsversuch geschützt. Da sich die Fangnut 21 über die gesamte Breite der Rastnase 9 erstreckt, wird gewährleistet, dass ein Manipulationswerkzeug 19, das auf die Rastnase 9 geschoben wird, auch stets in die Fangnut 21 gelangt.

Vorteilhafterweise ist die Fensterscheibe 2 an ihrem Rand 7 mit einer Einführfase 26 versehen, wie sie insbesondere in Figuren 2A und 2B gezeigt ist. Die Einführfase 26 ist dabei derart breit ausgebildet, dass beim Einschieben der Fensterscheibe 2 in die Aufnahmevertiefung 5 die Einführfase 26 die Fangnut 21 derart überbrückt, dass der Rand 7 beim Einführen stets auf den zweiten Abschnitt 12 der Einführschräge 10 der Rastnase 9 trifft, so dass die Rastnase 9 stets in die die Aufnahmevertiefung 5 freigebende Stellung durch das Einführen der Fensterscheibe 2 verbringbar ist.

## Patentansprüche

1. Mitnehmer (3) für eine verschiebbare Fensterscheibe (2), insbesondere eines Kraftfahrzeugs, mit einer Aufnahmevertiefung (5) zur Aufnahme eines Randabschnitts (6) der Fensterscheibe (2), und mit einer elastisch verlagerbaren Rastnase (5), die zum Eingriff in eine Rastaussparung (14) der Fensterscheibe (2) ausgebildet ist, um die Fensterscheibe an dem Mitnehmer (3) zu arretieren, wobei die Rastnase (9) in ihrer Ausgangsstellung die Aufnahmevertiefung (5) versperrt und eine der Aufnahmevertiefung (5) zugeordnete Einführschräge (10) aufweist, so dass die Rastnase (9) durch das Einführen der Fensterscheibe (2) in die Aufnahmevertiefung (5) in eine die Aufnahmevertiefung freigebende Stellung verlagert wird, wobei die Rastnase (9) an der Einführschräge (10) eine Fangnut (21) aufweist, **dadurch gekennzeichnet, dass** sich die Fangnut (21) parallel zur Aufnahmevertiefung (5) über die gesamte Breite der Rastnase (9) erstreckt.

2. Mitnehmer nach Anspruch 1, **dadurch gekennzeichnet, dass** die Fangnut (21) bei in die Aufnahmevertiefung (5) eingesteckter Fensterscheibe (2) in der Rastaussparung (14) der Fensterscheibe (2) liegt.

3. Mitnehmer nach einem der vorhergehenden Ansprüche, **dadurch gekennzeichnet, dass** die Fangnut (21) schmaler ausgebildet ist als die Aufnahmevertiefung (5), insbesondere schmaler als die Fensterscheibe (2).

4. Mitnehmer nach einem der vorhergehenden Ansprüche, **dadurch gekennzeichnet, dass** die Einführschräge (10) einen ersten Führungsabschnitt (11) und einen zweiten Führungsabschnitt (12) aufweist, die zueinander geneigt ausgerichtet sind.

5. Mitnehmer nach Anspruch 4, **dadurch gekennzeichnet, dass** die Fangnut (21) zwischen dem ersten Führungsabschnitt (11) und dem zweiten Führungsabschnitt (12) liegt.

6. Mitnehmer nach einem der vorhergehenden Ansprüche, **dadurch gekennzeichnet, dass** mindestens eine Seitenwand (23,24) der Fangnut (21) zumindest im Wesentlichen senkrecht zu einem Boden (22) der Fangnut (21) ausgerichtet ist.

7. Fensterscheibenanordnung (1), insbesondere für ein Kraftfahrzeug, mit einer verschiebbaren Fensterscheibe (2) und mit einem mit der Fensterscheibe (2) verbindbaren/verbundenen Mitnehmer (3), **gekennzeichnet durch** die Ausbildung des Mitnehmers (3) nach einem oder mehreren der vorhergehenden Ansprüche.

8. Fensterscheibenanordnung nach Anspruch 7, **dadurch gekennzeichnet, dass** die Fensterscheibe (2) an ihrem dem Mitnehmer (3) zugewandten Rand (7) wenigstens eine Einführfase (26) aufweist.

9. Fensterscheibenanordnung nach Anspruch 8, **dadurch gekennzeichnet, dass** die Einführfase (26) beim Einschieben der Fensterscheibe (2) in die Aufnahmevertiefung (5) die Fangnut (21) der Rastnase (9) überbrückt.

## Claims

1. Driver (3) for a slidable window pane (2), in particular of a motor vehicle, having a receiving depression (5) for receiving an edge portion (6) of the window pane (2), and having an elastically displaceable latching lug (5) which is designed to engage in a latching aperture (14) of the window pane (2) in order to arrest the window pane on the driver (3), wherein the latching lug (9) blocks the receiving depression (5) in its starting position and has an insertion bevel (10) assigned to the receiving depression (5), with the result that the latching lug (9) is displaced by the insertion of the window pane (2) into the latching depression (5) into a position in which it releases the receiving depression, wherein the latching lug (9) has a catch groove (21) on the insertion bevel (10), **characterized in that** the catch groove (21) extends parallel to the receiving depression (5) over the entire width of the latching lug (9).

2. Driver according to Claim 1, **characterized in that,** with the window pane (2) inserted into the receiving depression (5), the catch groove (21) is situated in the latching aperture (14) of the window pane (2).

3. Driver according to one of the preceding claims, **characterized in that** the catch groove (21) is designed to be narrower than the receiving depression (5), in particular narrower than the window pane (2).

4. Driver according to one of the preceding claims, **characterized in that** the insertion bevel (10) has a first guide portion (11) and a second guide portion (12) which are oriented at an inclination to one another.

5. Driver according to Claim 4, **characterized in that** the catch groove (21) is situated between the first guide portion (11) and the second guide portion (12).

6. Driver according to one of the preceding claims, **characterized in that** at least one side wall (23, 24) of the catch groove (21) is orientsed at least substantially perpendicularly to a bottom (22) of the catch groove (21).

7. Window pane arrangement (1), in particular for a motor vehicle, having a slidable window pane (2) and having a driver (3) which can be/is connected to the window pane (2), **characterized by** the design of the driver (3) according to one or more of the preceding claims.

8. Window pane arrangement according to Claim 7, **characterized in that** the window pane (2) has at least one insertion bevel (26) on its edge (7) facing the driver (3).

9. Window pane arrangement according to Claim 8, **characterized in that** the insertion bevel (26) bridges the catch groove (21) of the latching lug (9) when inserting the window pane (2) into the receiving depression (5).

## Revendications

1. Elément d'entraînement (3) destiné à une vitre coulissante (2), en particulier d'un véhicule automobile, avec un creux de réception (5) destiné à recevoir une partie de bord (6) de la vitre (2) et avec un ergot d'encliquetage déplaçable élastiquement (5), qui est configuré pour un engagement dans une découpe d'encliquetage (14) de la vitre (2), afin de bloquer la vitre sur l'élément d'entraînement (3), dans lequel l'ergot d'encliquetage (9) dans sa position initiale ferme le creux de réception (5) et présente une rampe d'introduction (10) associée au creux de réception (5), de telle manière que l'ergot d'encliquetage (9) soit déplacé dans une position libérant le creux de réception par l'introduction de la vitre (2) dans le creux de réception (5), dans lequel l'ergot d'encliquetage (9) présente une rainure de capture (21) sur la rampe d'introduction (10), **caractérisé en ce que** la rainure de capture (21) s'étend parallèlement au creux de réception (5) sur toute la largeur de l'ergot d'encliquetage (9).

2. Elément d'entraînement selon la revendication 1, **caractérisé en ce que** la rainure de capture (21) se place dans la découpe d'encliquetage (14) de la vitre (2) lorsque la vitre (2) est insérée dans le creux de réception (5).

3. Elément d'entraînement selon l'une quelconque des revendications précédentes, **caractérisé en ce que** la rainure de capture (21) est plus étroite que le creux de réception (5), en particulier plus étroite que la vitre (2).

4. Elément d'entraînement selon l'une quelconque des revendications précédentes, **caractérisé en ce que** la rampe d'introduction (10) présente une première partie de guidage (11) et une seconde partie de guidage (12), qui sont orientées de façon inclinée l'une par rapport à l'autre.

5. Elément d'entraînement selon la revendication 4, **caractérisé en ce que** la rainure de capture (21) est située entre la première partie de guidage (11) et la seconde partie de guidage (12).

6. Elément d'entraînement selon l'une quelconque des revendications précédentes, **caractérisé en ce qu'**au moins une paroi latérale (23, 24) de la rainure de capture (21) est au moins essentiellement perpendiculaire à un fond (22) de la rainure de capture (21) .

7. Agencement de vitre (1), en particulier pour un véhicule automobile, avec une vitre coulissante (2) et avec un élément d'entraînement (3) pouvant être/étant relié à la vitre (2), **caractérisé par** la formation de l'élément d'entraînement (3) selon une ou plusieurs des revendications précédentes.

8. Agencement de vitre selon la revendication 7, **caractérisé en ce que** la vitre (2) présente au moins un chanfrein d'introduction (26) sur son bord (7) tourné vers l'élément d'entraînement (3).

9. Agencement de vitre selon la revendication 8, **caractérisé en ce que** le chanfrein d'introduction (26) surplombe la rainure de capture (21) de l'ergot d'encliquetage (9) lors du glissement de la vitre (2) dans le creux de réception (5).
